# EUROPÄISCHE PATENTSCHRIFT

(11) **EP 1 987 944 B1**
(45) Veröffentlichungstag und Bekanntmachung des Hinweises auf die Patenterteilung: **25.07.2012**
(21) Anmeldenummer: 07008997.4
(22) Anmeldetag: 04.05.2007
(51) Int. Cl.: B29C 65/16, B23K 26/14

(54) **Laserdurchstrahlschweissvorrichtung und Verfahren zum Verbinden von Kunststoffwerkstücken**
Transmission laser welding device and process for joining plastic parts
Dispositif de soudage laser par transmission et procédé pour assembler des pièces en matière plastique

(43) Veröffentlichungstag der Anmeldung: 05.11.2008
(73) Patentinhaber: Leister Technologies AG, 6056 Kägiswil (CH)
(72) Erfinder: Sonderegger, Joseph, 6032 Emmen (CH)
(74) Vertreter: Klocke, Peter

(56) Entgegenhaltungen:
- EP-A- 1 254 760
- EP-A- 1 440 784
- WO-A-00/66345
- WO-A-2006/094305
- DE-A1- 4 225 679
- DE-A1- 4 225 680
- DE-A1- 10 004 538
- FR-A1- 2 774 559
- JP-A- 60 212 330
- US-A- 3 989 778
- US-A- 3 997 385
- US-A- 4 069 080
- US-A- 4 224 096
- US-A- 5 049 720
- US-A1- 2006 043 622

## Beschreibung

Die Erfindung betrifft eine Laserdurchstrahlschweißvorrichtung zum Verbinden von Werkstücken aus thermoplastischen Kunststoffen, mit einer Werkstückaufnahme zum Positionieren der Werkstücke, mit einem Bearbeitungskopf, in den ein Laserstrahl ein- und auskoppelbar ist, der die Werkstücke an ihren Kontaktflächen entlang einer Schweißkontur plastifiziert, wobei in dem Bearbeitungskopf Leiteinrichtungen für den Laserstrahl vorgesehen sind, und mit einer entfernt von den Werkstücken angeordneten Druckeinrichtung zum Zusammenpressen der Werkstücke während des Schweißvorgangs, die die Werkstücke mit mindestens einem Fluidstrom direkt beaufschlagt, der die Werkstücke aneinander und/oder gegen die Werkstückaufnahme presst, wobei der Bearbeitungskopf und die Werkstückaufnahme relativ zueinander bewegbar sind. Die Erfindung betrifft außerdem ein Verfahren zum Verbinden zweier Werkstücke aus thermoplastischen Kunststoffmaterialien entlang einander zugeordneter, definierter Kontaktflächen mittels einer Laserdurchstrahlschweißvorrichtung von der vorstehend beschriebenen Art, wobei das einer Laserquelle nähere Werkstück transparent und das davon entferntere Werkstück absorbierend für den Laserstrahl der Laserquelle ist.

Es ist bekannt, Werkstücke aus Kunststoffmaterialien mittels Laserstrahlen zu verbinden, in dem das dem Laserstrahl zugewandte obere für den Laserstrahl transparente Werkstück durchstrahlt und das untere den Laserstrahl absorbierende Werkstück an einer Kontaktfläche zu dem oberen Werkstück bis zur Plastifizierung erwärmt wird, um die beiden Werkstücke unter Druck miteinander zu verbinden. Es ist außerdem bekannt, hierzu einen linienförmigen Laserstrahl zu erzeugen und in einen relativ zu einer Werkstückaufnahme für die Werkstücke bewegbaren Bearbeitungskopf einzukoppeln, der mindestens eine Linse zur Formung und/oder Fokussierung des Laserstrahls auf die Kontaktflächen der Werkstücke aufweist.

Für diese Art des Kunststoffschweißens ist es wichtig, dass während des gesamten Schweißvorgangs die Werkstücke aneinander gepresst werden, Für eine gute Schweißverbindung zwischen den Werkstücken ist eine wichtige Voraussetzung nicht nur eine ausreichende Erwärmung der Kontaktflächen der Werkstücke, sondern auch ein enger mechanischer Kontakt zwischen der beiden Werkstücken bis zur Abkühlung der Kontaktflächen. Hierzu sind eine Anzahl von Vorrichtungen und Verfahren bekannt, die insbesondere bei flächigen Werkstücken eine entsprechende Anpresskraft ermöglichen. Beispielhaft wird auf die Patentoffenlegungsschriften DE 100 04 5 38, EP 1 254 760, WO 00/66345, DE 42 25 679, US 4,069,080, US 3,997,385 und US 5,049,720 verwiesen.

Die DE 100 04 5 38 A1 und die EP 1 254 760 A1 offenbaren ein Verfahren zum Laserdurchstrahlschweißen von Kunststoffen sowie eine Vorrichtung zur Anwendung des Verfahrens. Für das Schweißen zweier zu verbindender Lagen aus unterschiedlichen Kunststoffmaterialien, von denen eines für den Laserstrahl transmissiv und das andere absorbierend ist, werden die beiden Werkstücke mittels einer mechanischen Spannvorrichtung auf einer Werkstückaufnahme eingespannt. Dann werden die Werkstücke mit Laserstrahlung beaufschlagt, wobei der Laserstrahl durch die transmissive Lage hindurch die absorbierende Lage lokal aufschmilzt und für eine Verschmelzung der beiden Lagen sorgt. Das transmissive Werkstück wird zudem mit einem Fluidstrom in Form eines Gasstroms beaufschlagt, Der Gasstrom ist dabei auf die Eintrittszone des Laserstrahls gerichtet und kühlt die Oberfläche des Werkstücks, um Verbrennungen an der Oberseite dieser Lage zu verhindern.

Die WO 00/6345 und die US 5,049,720 beschreiben jeweils Verfahren und Vorrichtungen zum Laserdurchstrahlschweißen, bei denen die zu verschmelzenden Werkstücke mittels einer pneumatischen Spannvorrichtung gegen einen Werkstückträger gepresst werden. Dazu ist auf der dem Werkstückträger gegenüberliegenden Seite der Vorrichtung eine Druckkammer vorgesehen, die in Richtung des Laserstrahls eine für Laserlicht transparente Platte aufweist. Die Druckkammer wird mit Druckluft beaufschlagt, wodurch die Werkstücke gegeneinander und gegen den Werkstückträger gepresst werden.

Die US 3,997,385 lehrt eine Laserverbindungsvorrichtung und ein Laserverbindungsverfahren für thermoplastische Folien, metallische Folien oder kunststoffbeschichtetes Papier. Die zu verschweißenden Materialbahnen werden aneinanderliegend zwischen zwei aneinander gegenüberliegenden Düsenpaaren hindurchgeführt, wobei sie mittels einem Gasstrom lokal aneinander gepresst werden. An der Pressstelle werden die Materialbahnen mittels Laserstrahlen miteinander verbunden, die von Laserquellen ausgehen, die beidseits der Materialbahnen miteinander fluchtend angeordnet sind und jeweils eine Materialbahn mit Laserlicht beaufschlagen.

Die DE 42 25 679 A1 behandelt eine Anlage und ein Verfahren zum Verschweißen von Kunststoffteilen von Filterelementen der Medizin- und Labortechnik. Das Verschweißen im Laserdurchstrahlverfahren erfolgt unter Andruck der Kunststoffteile an der Fügenaht mittels Schutzgas. Das Schutzgas beaufschlagt die zu verbindenden Teile über den Schweißkopf an der jeweiligen Schweißstelle der Fügenaht und wird koaxial zum Laserstrahl geführt. Durch das Schutzgas wird eine Oxidation und eine Verfärbung des Kunststoffes verhindert.

Die US 4,069,080 dokumentiert ein zylindrisches Linsensystem zur Strahlformung eines Laserstrahls.

Für sich zwei- bzw. dreidimensional erstreckende Schweißkonturen von nicht plattenförmigen ebenen Werkstücken sind in der Regel spezielle mechanische Spannvorrichtungen erforderlich, um sowohl eine gleichmäßige Verteilung der Spannkraft auf die Werkstücke als auch eine möglichst gleichmäßige Dosierung des Spanndruckes für die gesamte Schweißkontur entlang den Kontaktflächen der Werkstücke sicher zustellen. Nicht ebene Schweißkonturen erfordern eine Spannvorrichtung, die die zu verbindenden Werkstücke gleichzeitig in verschiedene Richtungen entlang der Schweißkontur möglichst senkrecht zu den Kontaktflächen beaufschlagt. Ein enger mechanischer Kontakt entlang der gesamten Schweißkontur lässt sich technisch jedoch schwierig realisieren, weswegen derartige Spannvorrichtungen aufwändig und damit teuer sind. Außerdem sind für unterschiedliche Formen der Werkstücke jeweils eigene Spannvorrichtungen erforderlich.

Der vorliegenden Erfindung liegt daher die Aufgabe zugrunde, eine Möglichkeit vorzuschlagen, die das Konturschweißen von Werkstücken aus Kunststoff im Laserdurchstrahlverfahren ohne individuelle, an die Form der Werkstücke angepasste Spannvorrichtungen erlaubt.

Diese Aufgabe wird erfindungsgemäß durch eine Laserdurchstrahlschweißvorrichtung zum Verbinden von thermoplastischen Kunststoffwerkstücken mit den Merkmalen des Anspruchs 1 sowie durch ein Verfahren mit den Merkmalen des Anspruchs 10 gelöst. Weitere vorteilhafte Ausgestaltungen sind den jeweiligen rückbezogenen Unteransprüchen zu entnehmen.

Bei der erfindungsgemäßen Laserdurchstrahlschweißvorrichtung ist der mindestens eine Fluidstrom, mit der die Druckeinrichtung die entfernten , zu verbindenden Werkstücke beaufschlagt, ein Flüssigkeitsstrom. Der Flüssigkeitsstrom presst die Werkstücke aneinander und gegen eine Werkstückaufnahme , die die Werkstücke positioniert. Dabei kann der Fluidstrom die Werkstücke von der Seite des Bearbeitungskopfes her und/oder von der dem Bearbeitungskopf gegenüberliegenden Seite her beaufschlagen.

Das mechanische Zusammenpressen der Werkstücke mittels dem Flüssigkeitsstrom kann über die gesamte Fläche der Werkstücke oder nur in Teilbereichen der Werkstücke erfolgen. Wichtig ist jedoch, dass die Druckeinrichtung nicht direkt an den Werkstücken angreift, sondern einen Abstand zu diesen aufweist, so dass die Druckeinrichtung unabhängig von der Form der Werkstücke einsetzbar ist. Die Stärke des Flüssigkeitsstroms ist zweckmäßigerweise einstellbar. Damit ist eine Dosierung der Spannkraft entsprechend der Stabilität der Werkstücke möglich.

Bei einer Ausgestaltung der Erfindung wird als Flüssigkeitsstrom ein Wasserstrom verwendet, der von einer Druckwasserversorgung ausgeht. Dies hat den Vorteil, dass der Laserstrahl im wesentlichen ohne Beeinflussung, d.h. ohne Absorption und/oder Ablenkung durch den Fluidstrom zu den Werkstücken gelenkt werden kann. Außerdem verbleiben an den Werkstücken keine unerwünschten Rückstände von dem Fluidstrom, die eine nachträgliche Reinigung erforderlich machen. Zudem sind Wasseranschlüsse in Industrie und Handwerk in der Regel verfügbar, um den Wasserstrom kostengünstig bereit zu stellen. Das Wasser kann nach der Beaufschlagung der Werkstücke erneut verwendet oder einfach als Abwasser der Kanalisation zugeleitet werden. Statt Wasser kann auch eine beliebige andere geeignete Flüssigkeit oder ein entsprechendes Flüssigkeitsgemisch eingesetzt werden. Die Verwendung eines Flüssigkeitsstromes, insbesondere eines Wasserstroms ermöglicht gegenüber einem Gasstrom eine wesentlich höhere Spannkraft.

In einer Ausbildungsform der Erfindung geht der Fluidstrom für die Druckeinrichtung von einer beheizbaren Quelle aus. Dies hat den vorteilhaften Effekt, dass mit dem Zusammenpressen der Werkstücke gleichzeitig von dem Fluidstrom Wärme auf die Werkstücke übertragen wird, die eine Vorwärmung der Werkstücke bewirkt. Damit kann die Energieübertragung durch den Laserstrahl reduziert werden, was sich auf die Prozesszeit für das Kunststoffschweißen positiv auswirkt.

In einer vorteilhaften Ausführungsform der Erfindung ist auf der dem Bearbeitungskopf zugewandten Seite der Werkstücke im Bereich der Bearbeitungskopfes mindesten eine Austrittsdüse für den Fluidstrom angeordnet. Die Austrittsdüse weist in Richtung der Werkstücke und ist synchron mit dem Bearbeitungskopf, relativ zu den von der Werkstückaufnahme getragenen Werkstücken bewegbar. Die Austrittsdüse kann von dem Bearbeitungskopf getrennt oder mit diesem verbunden sein. Wichtig ist dabei, dass der Fluidstrom die Werkstücke während des Schweißvorgangs immer in einem bestimmten Bereich um die Auftreffstelle des Laserstrahls gegeneinander presst. Der Fluidstrom sollte dabei den Bereich um den Laserstrahl möglichst gleichmäßig beaufschlagen, damit die Werkstücke plan aneinander liegen. Dies ist zwangsläufig so, wenn die Austrittsdüse mit dem Bearbeitungskopf verbunden und starr auf den Bereich um die Auftreffstelle des Laserstrahls ausgerichtet ist. Ist die Austrittsdüse jedoch von dem Bearbeitungskopf getrennt, so ist ein zusätzlicher Manipulator für die Austrittsdüse notwendig, der die Austrittsdüse an die Bewegung des Bearbeitungskopfes gekoppelt, softwaregesteuert mit dem Laserstrahl mitbewegt. Der Bearbeitungskopf und die Austrittsdüse können auch ortsfest sein, wenn die Werkstücke an dem Bearbeitungskopf vorbeigeführt werden.

In einer weiteren vorteilhaften Ausführungsform der Erfindung ist die mindestens eine Austrittsdüse für den Fluidstrom an einem Düsenkopf auf der dem Bearbeitungskopf abgewandten Seite der Werkstücke, gegenüber dem Bearbeitungskopfes, angeordnet. Die Austrittsdüse weist ebenfalls in Richtung der Werkstücke, wobei die Bewegung des Bearbeitungskopfes und des Düsenkopfes miteinander mechanisch oder elektronisch gekoppelt sein können, um eine synchrone Bewegung sicherzustellen. Werden an Stelle des Bearbeitungskopfes und der Austrittsdüse die Werkstücke zum Verschweißen der Werkstücke bewegt, wie beispielsweise zum Schweißen von endlosen Folien, so beaufschlagen der Laserstrahl und der Fluidstrom die Werkstücke gemeinsam immer an der jeweiligen momentanen Schweißstelle gleichzeitig.

Es ist naheliegend, sowohl auf der dem Bearbeitungskopf zugewandten und auch auf der dem Bearbeitungskopf abgewandten Seite der Werkstücke, im Bereich der Bearbeitungskopfes und diesem gegenüber, mindesten je eine Austrittsdüse für den Fluidstrom anzuordnen. Damit kann der Anpressdruck für die Werkstücke deutlich verstärkt werden.

Unabhängig von der Anordnung der Austrittsdüsen auf einer oder zwei Seiten der Werkstücke, können die Werkstücke zumindest in Teilbereichen mit einer Maske abgedeckt werden. Die Durchbrüche in den Masken bestimmen Bereiche, in denen der Laserstrahl und/oder der Fluidstrom auf die Werkstücke einwirken können. Die abgedeckten Bereiche der Werkstücke werden vor Erwärmung durch den Laserstrahl sowie durch Beschädigung durch den Druck des Fluidstroms sicher geschützt. Oft ist es zweckmäßig, für beide Seiten der Werkstücke identisch ausgeführte Masken zu verwenden und diese miteinander fluchtend auszurichten. Damit wird automatisch erreicht, dass das Erwärmen und das Zusammenpressen der Werkstücke stets gleichzeitig an vorgegebenen Stellen, unabhängig von der Ausdehnung des Laserstrahls und des Fluidstroms, erfolgt.

Bevorzugt wird eine Ausführungsform der erfindungsgemäßen Laserdurchstrahlschweißvorrichtung, bei der ein Bearbeitungskopf, in den der Laserstrahl ein- und auskoppelbar ist, mindestens eine Austrittsdüse für den Fluidstrom aufweist, die in Richtung der Werkstückaufnahme gerichtet ist. Durch die Austrittsdüse ist der Fluidstrom hin zu den Werkstücken gerichtet, um diese in einem Bereich um den Bearbeitungskopf zusammen zu pressen, wobei die Austrittsdüse starr oder einstellbar mit dem Bearbeitungskopf verbunden sein kann.

Da der Bearbeitungskopf und die Werkstückaufnahme relativ zueinander bewegbar ausgebildet sind, verändert sich die Auftreffstelle des Fluidstroms an dem dem Bearbeitungskopf zugewandten Werkstück bei einer Bewegung des Bearbeitungskopfes und/oder der Werkstückaufnahme. Je nach Ausbildung der Austrittsdüse(n) erfolgt das Zusammenpressen der Werkstücke in einem größeren oder kleineren Bereich um die Stelle, an der Laserstrahl auf die Werkstücke auftritt. Damit bietet die Erfindung die Möglichkeit, die benötigte Spannkraft gleichzeitig mit dem Laserstrahl entlang einer programmierbaren Schweißkontur kontinuierlich, aber stets bereichsweise an die Stelle zu bringen, an der der Schweißvorgang augenblicklich stattfindet und wo der Anpressdruck in diesem Moment benötigt wird.

Vorteilhafterweise ist eine Längsachse der Austrittsdüse parallel zu dem Laserstrahl ausgerichtet. Damit ist der Bearbeitungskopf so ausgebildet, dass der Laserstrahl und der Fluidstrom immer parallel zueinander verlaufen. Dabei kann der Bearbeitungskopf jederzeit so geschwenkt werden, dass der Laserstrahl sowie der Fluidstrom auch bei dreidimensionalen Schweißkonturen immer senkrecht zu den Kontaktflächen der Werkstücke wirken und somit die größte Effizienz zeigen.

Da die relative Bewegung zwischen dem Bearbeitungskopf und den zu verschweißenden Werkstücken gemäß der Erfindung ohne mechanische Berührung abläuft, kann für den Schweißvorgang der Abstand des Bearbeitungskopfes zu den Werkstücken unter Aufrechterhaltung einer ausreichenden Beaufschlagung durch den Fluidstrom in einem gewissen Bereich beliebig variiert werden, um die Fokusebene des Laserstrahls an die Lage der Kontaktflächen anzupassen. Die gewünschte Spannkraft für die Werkstücke kann durch programmierbare Einstellung des Druckes des an den Bearbeitungskopf herangeführten Fluidstroms in Abhängigkeit des Abstandes des Bearbeitungskopfes und/oder der Austrittsdüse von den Werkstücken erreicht werden.

Eine bevorzugte Weiterbildung der Erfindung sieht vor, dass die Austrittsdüse für den Fluidstrom konzentrisch zu dem Laserstrahl angeordnet ist. Damit wird mit dem Fluidstrom der Laserstrahl durch die Mündung der Austrittsdüse im Zentrum des Fluidstroms auf die zu verbindenden Werkstücke gelenkt. Dies ermöglicht, die Werkstücke stets punktuell an der Stelle zusammen zu pressen, an der der Laserstrahl gerade die Werkstücke miteinander verschweißt. Dabei wird der Fluidstrom beim Auftreffen auf die Werkstücke gleichmäßig radial von dem Laserstrahl weg abgelenkt.

In einer vorteilhaften Ausführungsform der Erfindung weist der Bearbeitungskopf mindestens eine Linse zur Formung des Laserstrahls und/oder zur Fokussierung des Laserstrahls auf eine von den Kontaktflächen der Werkstücke bestimmten Fokusebene auf. Dies ermöglicht, die Energiedichte des Laserstrahls für die Plastifizierung der Kontaktflächen der Werkstücke entlang der Schweißkontur zu optimieren und bei Bedarf die Breite der Schweißnaht zu variieren.

Die Erfindung ermöglicht damit eine große Sicherheit der Schweißqualität, insbesondere bei dreidimensionalen Anordnungen und erlaubt gleichzeitig ein hohe Flexibilität bei unterschiedlichen Schweißvorgängen, ohne teure und aufwändige Spannwerkzeuge. Ein weiterer Vorteil liegt darin, dass insbesondere bei dünnen Materialien keine Materialdeformation der Werkstücke statt findet, die eine Mitbewegung der zu verschweißenden Werkstücke bewirkt, was hinsichtlich der Genauigkeit und der Qualität der Schweißverbindung unerwünscht ist. Im Hinblick auf ein möglichst effektives Zusammenpressen und eine zielgerichtete Energieübertragung ist es notwendig, beim Bewegen des Bearbeitungskopfes entlang einer Schweißkontur, die Längsachse des Bearbeitungskopfes stets senkrecht zu den Kontaktflächen der Werkstücke zu halten. Dies kann durch entsprechendes Programmieren eines mehrachsigen Robotersystems erfolgen, das den Bearbeitungskopf trägt.

Mit der erfindungsgemäßen Laserdurchstrahlweißvorrichtung erfolgt das Verbinden zweier zu verbindender Werkstücke aus thermoplastischen Kunststoffmaterialien entlang einander zugeordneter, definierter Kontaktflächen mittels einer Laserdurchstrahlschweißvorrichtung, wie vorstehend beschrieben, wobei das einer Laserquelle nähere Werkstück transparent und das davon entferntere Werkstück absorbierend für den Laserstrahl der Laserquelle ist, mit den folgenden Verfahrensschritten:
- Anordnen der Werkstücke auf einer Werkstückaufnahme vor einer Austrittsdüse oder zwischen zwei einander gegenüberliegenden Austrittsdüsen für einen Flüssigkeitsstrom;
- Beaufschlagen der Werkstücke mit einem Flüssigkeitsstrom aus mindestens einer Austrittdüse und Zusammenpressen der beiden Werkstücke mit einem einstellbaren Anpressdruck des Flüssigkeitsstroms;
- Beaufschlagen der zusammengepressten Werkstücke mit einem Laserstrahl und Aufschmelzen der Kontaktflächen der beiden Werkstücke unter Einwirkung des Laserstrahls; und
- Abkühlen der Kontaktflächen unter Aufrechterhaltung des Anpressdrucks.

Bei dem von der erfindungsgemäßen Laserdurchstrahlschweißeinrichtung bestimmten Verfahren werden vorteilhafterweise die beiden Werkstücke mit einem Flüssigkeitsstrom beaufschlagt, der die Werkstücke aneinander und/oder gegen die Werkstückaufnahme presst. Der Flüssigkeitsstrom hat seinen Ursprung in einer oder zwei einander gegenüberliegenden Austrittsdüsen, vor bzw. zwischen denen die Werkstücke auf einer Werkstückaufnahme angeordnet werden. Die Austrittsdüsen sind in Richtung der Werkstücke gerichtet, so dass die beiden Werkstücke mit einem vorgegebenen, einstellbaren Anpressdruck von dem mindestens einen Flüssigkeitsstrom gegeneinander gepresst werden. Werden die Werkstücke nur von einer Austrittsdüse her beaufschlagt, so kann diese auf der dem Bearbeitungskopfes zugeordneten oder auf der dem Bearbeitungskopf gegenüberliegenden Seite vor den Werkstücken angeordnet werden.

Nach dem Zusammenpressen der Werkstücke mittels dem mindestens einem Flüssigkeitsstrom wird das einer Laserquelle nähere transparente Werkstück mit einem Laserstrahl beaufschlagt, der von dem Bearbeitungskopf der Laserdurchstrahlschweißvorrichtung ausgeht. Dabei werden die Kontaktflächen der Werkstücke in einem Bereich um das Zentrum des Laserstrahls unter Einwirkung des Laserstrahls und unter und des Anpressdruckes des Flüssigkeitsstromes aufgeschmolzen. Anschließend kühlen die Kontaktflächen der Werkstücke ohne Laserstrahleinwirkung ab, wobei der Anpressdruck aufrechterhalten wird, bis eine erste mechanische Festigkeit erreicht ist.

Vorzugsweise wird das der Laserquelle nähere Werkstück mit dem Flüssigkeitsstrom beaufschlagt. Der Flüssigkeitsstrom wird dabei auf die Auftreffstelle des Laserstrahls oder auf einen Bereich um die Auftreffstelle des Laserstrahls an dem der Laserquelle zugewandten Werkstück gerichtet und wird synchron mit dem Laserstrahl entlang den Kontaktflächen der Werkstücke bewegt, um die Schweißkontur abzufahren und die Schweißverbindung herzustellen.

Nachfolgend wird die Erfindung anhand dreier in der Zeichnung dargestellten Ausführungsbeispiele näher erläutert. Weitere Merkmale der Erfindung ergeben sich aus der folgenden Beschreibung des Ausführungsbeispiels der Erfindung in Verbindung mit den Ansprüchen und der beigefügten Zeichnung. Die Figuren der Zeichnung zeigt den Bearbeitungskopf einer erfindungsgemäßen Laserdurchstrahlschweißvorrichtung in einer schematischen Darstellung. Es zeigen:
- Figur 1: Eine Schnittdarstellung einer ersten erfindungsgemäßen Laserdurchstrahlschweißvorrichtung mit einer im Bearbeitungskopf integrierten Austrittsdüse für einen Flüssigkeitsstrom;
- Figur 2: Eine Schnittdarstellung einer zweiten erfindungsgemäßen Laserdurchstrahlschweißvorrichtung mit einem Bearbeitungskopf ohne integrierten Austrittsdüse und mit einer dem Bearbeitungskopf gegenüber angeordneten Austrittsdüse; und
- Figur 3: Eine Schnittdarstellung einer dritten erfindungsgemäßen Laserdurchstrahlschweißvorrichtung mit einer im Bearbeitungskopf integrierten ersten Austrittsdüse für einen ersten Flüssigkeitsstrom und mit einer dem Bearbeitungskopf gegenüber angeordneten zweiten Austrittsdüse für einen zweiten Flüssigkeitsstrom.

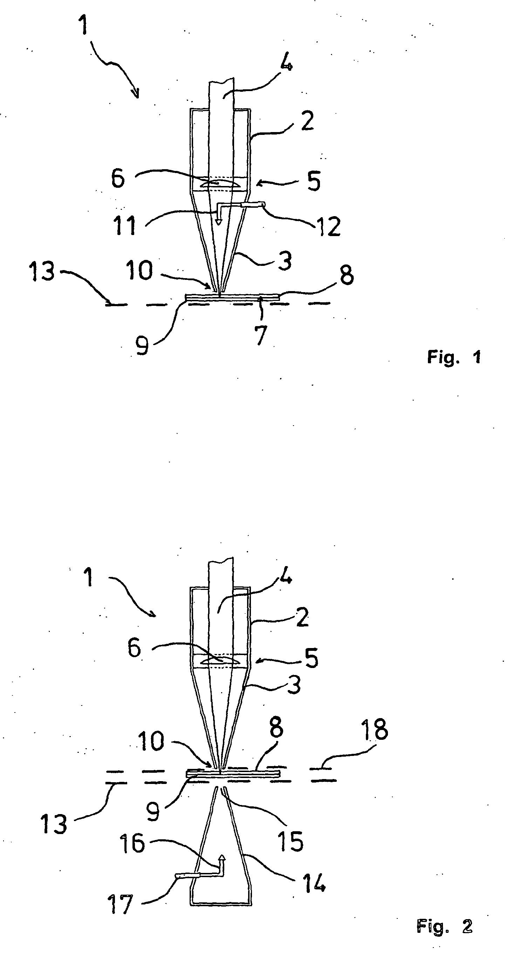

Der in den Figuren 1 - 3 der Zeichnung dargestellte Bearbeitungskopf 1 ist Teil einer erfindungsgemäßen Laserdurchstrahlschweißvorrichtung, die an sich in der Zeichnung nicht dargestellt ist. Der Bearbeitungskopf ist oberhalb von zwei zu verbindenden Werkstücken 8, 9 angeordnet, die auf einer Werkstückaufnahme 13 aufliegen. Der Bearbeitungskopf 1 weist einen oberen zylindrischen Kopfbereich 2 und einen daran anschließenden, unteren konischen Kopfbereich 3 auf, in den ein Laserstrahl 4 eingekoppelt ist. Der Laserstrahl 4 verläuft im Inneren des Bearbeitungskopfes 1 in Richtung einer Längsachse des Bearbeitungskopfes 1 und wird an einem Übergang 5 zwischen dem zylindrischen Kopfbereich 2 und dem konischen Kopfbereich 3 mittels einer Linse 6 fokussiert und auf eine Fokusebene 7 gelenkt, die von Kontaktflächen der zu verschweißenden Werkstücken 8, 9 bestimmt ist.

Bei dem ersten Ausführungsbeispiel in Figur 1 verjüngt sich der konische Kopfbereich 3 des Bearbeitungskopfs 1 von dem zylindrischen Kopfbereich 2 hin zu den Werkstücken 8, 9 und endet in einer Austrittsdüse 10, die in einem geringen Abstand zu den Werkstücken 8, 9 über dem oberen Werkstück 8 angeordnet ist. Durch die Austrittsdüse 10 tritt der Laserstrahl 4 aus dem Bearbeitungskopf 1 aus, durchstrahlt das obere Werkstück 8 bis er an der Fokusebene 7 die Werkstücke 8, 9 an ihren Kontaktflächen erwärmt. Dabei wird ein Fluidstrom 11, in Form eines Flüssigkeitsstromes durch den konischen Kopfbereich 3 des Bearbeitungskopfes 1 geführt. Dieser wird ausgehend von einer in der Zeichnung nicht dargestellten Quelle mit Druck an einen Anschlussstutzen 12 des Bearbeitungskopfes 1 herangeführt, der am Übergang 5 des Kopfbereiches 3 zu dem Kopfbereich 2 unterhalb der Linse 6 seitlich angeordnet ist. Der Fluidstrom 11 in dem unteren Kopfbereich 3 des Bearbeitungskopfes 1 ist in Richtung der Austrittsdüse 10 gerichtet, aus der er austritt und das obere Werkstück 8 der beiden Werkstücke 8, 9 senkrecht zum Werkstück 8 beaufschlagt und damit die beiden Werkstücke 8, 9 auf der Werkstückaufnahme 13 an der Fokusebene 7, um den Laserstrahl 4 herum, zusammenpresst.

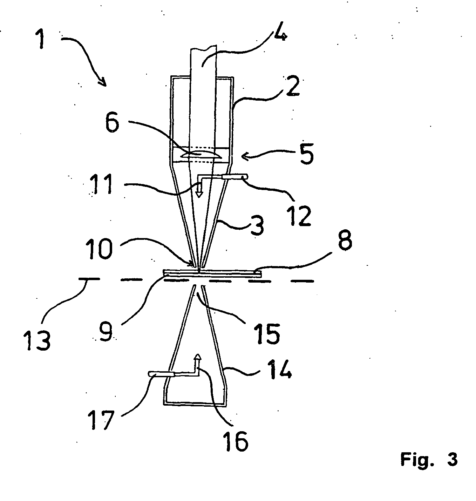

Bei dem dritten Ausführungsbeispiel in Figur 3 ist der Bearbeitungskopf 1 entsprechend dem ersten Ausführungsbeispiel ausgebildet. Er beaufschlagt das obere Werkstücke 8 von oben her mit einem ersten Fluidstrom 11 und mit einem Laserstrahl 4. Zusätzlich ist unterhalb der Werkstücke 8, 9 ein Düsenkopf 14 mit einer zweiten Austrittsdüse 15 für einen zweiten Fluidstrom 16 vorgesehen, der das Werkstück 9 von unten her mit dem Fluidstrom 16 beaufschlagt. Dafür muss die Werkstückaufnahme 13, auf das das untere Werkstück 9 aufliegt, bestimmte Ausnehmungen zum Durchtritt des Fluidstroms 16 aufweisen. Die Fluidströme 11, 16 sind vorzugsweise Wasserströme, die entgegengesetzt gerichtet sind und die die beiden Werkstücke 8, 9 an ihren Kontaktflächen zusammenpressen.

Abhängig von dem Anpressdruck der beiden Fluidströme 11, 16 kann, bei unverändertem Anpressdruck der beiden

Werkstücke 8, 9 aneinander, der Anpressdruck des unteren Werkstücks 9 an die Werkstückaufnahme 13 minimiert werden. Der Düsenkopf 14 mit der Austrittsdüse 15 ist im Wesentlichen entsprechend dem konischen Kopfbereich 3 des Bearbeitungskopfes 1 ausgebildet. Ihm wird entsprechend dem konischen Kopfbereich 3 des Bearbeitungskopfes 1 vorzugsweise ein Luftstrom über einen Anschlussstutzen 17 zugeführt.

Das zweite Ausführungsbeispiel in Figur 2 unterscheidet sich von dem dritten Ausführungsbeispiels lediglich dadurch, dass der Bearbeitungskopf 1 keinen Anschlussstutzen 12 zum Einleiten eines Fluidstroms in den konischen Kopfbereich 3 aufweist. Dementsprechend geht von der Austrittsdüse 10 kein Fluidstrom 11 aus, der das obere Werkstück 8 von oben her beaufschlagt. Damit ist auch die Austrittsdüse 10 nicht notwendig, so dass der Bearbeitungskopf 1 an seinem unteren Ende auch eine andere Form aufweisen kann. Die untere Austrittsdüse 15 beaufschlagt das untere Werkstück 9 von unten her mit dem Fluidstrom 16. Der Fluidstrom 16 ist in Richtung der Werkstückaufnahme 13 gerichtet und presst die Werkstücke 8, 9 an ihren Kontaktflächen aneinander und gegen eine zwischen dem Bearbeitungskopf 1 und dem oberen Werkstück 8 angeordneten Werkstückgegenhalter 18 mit Durchbrüchen zum Durchtritt des Laserstrahls 4.

Bei der in Figur 1 dargestellten Laserdurchstrahlschweißvorrichtung ist die Austrittsdüse 10 Teil des Bearbeitungskopfes1, so dass die Austrittsdüse 10 für den Schweißvorgang zwangsläufig synchron mit dem Bearbeitungskopf 1 relativ zu den Werkstücken 8, 9 bewegt wird. Damit beaufschlagen der Laserstrahl 4, der in dem zylindrischen Kopfbereich 2 des Bearbeitungskopf 1 auf eine Fokusebene 7 fokussiert wird, und der Fluidstrom 11, der mittels der Austrittsdüse 10 in Richtung des Laserstrahls 4 ausgerichtet ist, die Werkstücke 8, 9 in einem gemeinsamen Bereich. Bei den in den Figuren 2, 3 dargestellten Ausführungsbeispielen ist es beim Schweißen erforderlich, den Düsenkopf 14 synchron mit dem Bearbeitungskopf 1 relativ zu den Werkstücken 8, 9 zu bewegen. Der Bearbeitungskopf 1 und der Düsenkopf 14 müssen immer fluchtend zueinander ausgerichtet sein, damit der von unten wirkende Fluidstrom 16 die Werkstücke 8, 9 stets in einem bestimmten Bereich um die Auftreffstelle des Laserstrahls 4 auf das obere Werkstück 8 beaufschlagt und diese damit zusammenpresst. Dafür muß die Bewegung des Düsenkopfes 14 mit in der Zeichnung nicht dargestellten mechanischen oder elektronischen Einrichtungen an die Bewegung des Bearbeitungskopfes 1 gekoppelt sein.

## Patentansprüche

1. Laserdurchstrahlschweißvorrichtung zum Verbinden von Werkstücken (8, 9) aus thermoplastischen Kunststoffen, mit einer Werkstückaufnahme zum Positionieren der Werkstücke (8, 9), mit einem Bearbeitungskopf (1), in den ein Laserstrahl (4) ein- und auskoppelbar ist, der die Werkstücke (8, 9) an ihren Kontaktflächen entlang einer Schweißkontur plastifiziert, wobei in dem Bearbeitungskopf (1) Leiteinrichtungen für den Laserstrahl (4) vorgesehen sind, und mit einer entfernt von den Werkstücken (8, 9) angeordneten Druckeinrichtung zum Zusammenpressen der Werkstücke (8, 9) während des Schweißvorgangs, die die Werkstücke (8, 9) mit mindestens einem Fluidstrom (11, 16) direkt beaufschlagt, der die Werkstücke (8, 9) aneinander und/oder gegen die Werkstückaufnahme (13) presst, wobei der Bearbeitungskopf (1) und die Werkstückaufnahme relativ zueinander bewegbar sind, **dadurch gekennzeichnet, dass** der Fluidstrom (11, 16) ein Flüssigkeitsstrom ist.

2. Laserdurchstrahlschweißvorrichtung nach Anspruch 1, **dadurch gekennzeichnet**, das der Flüssigkeitsstrom (11, 16) ein Wasserstrom ist.

3. Laserdurchstrahlschweißvorrichtung nach Anspruch 1 oder 2, **dadurch gekennzeichnet, dass** der Flüssigkeitsstrom (11, 16) von einer beheizbaren Quelle ausgeht.

4. Laserdurchstrahlschweißvorrichtung nach einem der Ansprüche 1 bis 3, **dadurch gekennzeichnet, dass** auf der dem Bearbeitungskopf (1) zugewandten Seite der Werkstücke (8, 9) im Bereich des Bearbeitungskopfes (1) mindestens eine Austrittsdüse (10) für den Flüssigkeitsstrom (11) in Richtung der Werkstücke (8, 9) angeordnet ist, die synchron mit dem Bearbeitungskopf (1) relativ zu den Werkstücken (8, 9) bewegbar ist.

5. Laserdurchstrahlschweißvorrichtung nach einem der Ansprüche 1 bis 3, **dadurch gekennzeichnet, dass** auf der dem Bearbeitungskopf (1) abgewandten Seite der Werkstücke (8, 9) gegenüber dem Bearbeitungskopf (1) ein Düsenkopf (14) mit mindestens einer Austrittsdüse (15) für den Flüssigkeitsstrom (16) in Richtung der Werkstücke (8, 9) angeordnet ist, der synchron mit dem Bearbeitungskopf (1) relativ zu den Werkstücken (8, 9) bewegbar ist.

6. Laserdurchstrahlschweißvorrichtung nach Anspruch 4, **dadurch gekennzeichnet, dass** der Bearbeitungskopf (1) die mindestens eine Austrittsdüse (10) für den Flüssigkeitsstrom (11) aufweist, die in Richtung der Werkstücke (8, 9) gerichtet ist.

7. Laserdurchstrahlschweißvorrichtung nach Anspruch 4 oder 5, **dadurch gekennzeichnet, dass** eine Längsachse der Austrittsdüse (10, 15) parallel zu dem Laserstrahl (4) ausgerichtet ist.

8. Laserdurchstrahlschweißvorrichtung nach einem der Ansprüche 4 bis 7, **dadurch gekennzeichnet, dass** die Austrittsdüse (10, 15) konzentrisch zu dem Laserstrahl (4) angeordnet ist.

9. Laserdurchstrahlschweißvorrichtung nach einem der vorangegangenen Ansprüche, **dadurch gekennzeichnet**, der Bearbeitungskopf (1) mindestens eine Linse (6) zur Formung und/oder Fokussierung des Laserstrahls (4) auf eine von den Kontaktflächen der Werkstücke (8, 9) bestimmten Fokusebene (7) aufweist.

10. Verfahren zum Verbinden zweier Werkstücke (8, 9) aus thermoplastischen Kunststoffmaterialien entlang einander zugeordneter, definierter Kontaktflächen mittels einer Laserdurchstrahlschweißvorrichtung gemäß einem der vorangegangenen Ansprüche 1 bis 9, wobei das einer Laserquelle nähere Werkstück transparent und das davon entferntere Werkstück absorbierend für den Laserstrahl (4) der Laserquelle ist, mit den folgenden Verfahrensschritten:
• Anordnen der Werkstücke (8, 9) auf einer Werkstückaufnahme (13) vor einer Austrittsdüse (10) bzw. (15) oder zwischen zwei einander gegenüberliegenden Austrittsdüsen (10, 15) für einen Flüssigkeitsstrom (11, 16);
• Beaufschlagen der Werkstücke (8, 9) mit einem Flüssigkeitsstrom (11, 16) aus mindestens einer Austrittdüse (10, 15) und Zusammenpressen der beiden Werkstücke (8, 9) mit einem einstellbaren Anpressdruck des Flüssigkeitsstroms (11, 16);
• Beaufschlagen der zusammengepressten Werkstücke (8, 9) mit einem Laserstrahl (4) und Aufschmelzen der Kontaktflächen der beiden Werkstücke (8, 9) unter Einwirkung des Laserstrahls; und
• Abkühlen der Kontaktflächen unter Aufrechterhaltung des Anpressdrucks.

11. Verfahren nach Anspruch 10, **dadurch gekennzeichnet, dass** als Flüssigkeitsstrom (11, 16) ein Wasserstrom verwendet wird.

12. Verfahren nach Anspruch 10 oder 11, **dadurch gekennzeichnet, dass** der Flüssigkeitsstrom (11, 16) aufgeheizt und die Wärme von dem Flüssigkeitsstrom (11, 16) auf die Werkstücke (8, 9) übertragen wird.

13. Verfahren nach einem der Ansprüche 10 bis 12, **dadurch gekennzeichnet, dass** der Flüssigkeitsstrom (11, 16) und der Laserstrahl (4) synchron zueinander relativ zu den Werkstücken (8, 9) bewegt werden.

14. Verfahren nach einem der Ansprüche 10 bis 13, **dadurch gekennzeichnet, dass** der Flüssigkeitsstrom (11, 16) auf das der Laserquelle nähere, für den Laserstrahl (4) transparente Werkstück (8) und/oder auf das von der Laserquelle entferntere, den Laserstrahl (4) absorbierende Werkstück (9) gerichtet wird.

15. Verfahren nach einem der Ansprüche 10 bis 14, **dadurch gekennzeichnet, dass** der Flüssigkeitsstrom (11, 16) und der Laserstrahl (4) parallel zueinander, vorzugsweise konzentrisch zueinander ausgerichtet werden.

## Claims

1. Laser transmission-welding device for of joining work pieces (8, 9) made of thermoplastic materials, with a work piece holder for positioning the work pieces (8, 9), with a machining head (1), into and out of which a laser beam (4) can be coupled, which plasticizes the work pieces (8, 9) along a welding contour at their contact surfaces, wherein in the machining head (1) guiding-means for the laser beam (4) are provided, and with a pressure equipment for pressing the work pieces (8, 9) against one another during the welding process, that is remotely located with respect to the work pieces (8, 9) and directly impinges the work pieces (8, 9) with a fluid stream (11, 16), which presses the work pieces (8, 9) together and / or against the work piece holder (13), wherein the processing head (1) and the work piece holder (13) are movable relative to each other, **characterized in that** the fluid stream (11, 16) is a liquid stream.

2. Laser transmission-welding device as claimed in claim 1, **characterized in that** the liquid stream (11, 16) is a hydrogen stream.

3. Laser transmission-welding device as claimed in claim 1 or 2, **characterized in that** the liquid stream (11, 16) emanates from a heatable source.

4. Laser transmission-welding device as claimed in any one of the claims 1 to 3, **characterized in that** on the side of the work pieces (8, 9) facing towards the machining head (1)) in the region of the machining head (1) at least one outlet nozzle (10) for the liquid stream (11) directed towards the work pieces (8, 9) is arranged, which is synchronously movable with the machining head (1) relative to the work pieces (8, 9).

5. Laser transmission-welding device as claimed in any one of the claims 1 to 3, **characterized in that** on the side of the work pieces (8,9) facing away from the machining head (1) a nozzle head (14) having at least one outlet nozzle (15) for the liquid stream (16) directed towards the work pieces (8, 9) is arranged, which is synchronously movable with the machining head (1) relative to the work pieces (8, 9).

6. Laser transmission-welding device as claimed in claim 4, **characterized in that** the machining head (1) comprises the at least one outlet nozzle (10) for the liquid stream (11), which is directed towards the work pieces (8, 9).

7. Laser transmission-welding device as claimed in claim 4 or 5, **characterized in that** a longitudinal axis of the outlet nozzle (10, 15) is aligned parallel to the laser beam (4).

8. Laser transmission-welding device as claimed in any one of the claims 4 to 7, **characterized in that** the outlet nozzle (10, 15) is arranged concentrically to the laser beam (4).

9. Laser transmission-welding device as claimed in any one of the claims, **characterized in that** the machining head (1) comprises at least one lens (6) for shaping and / or focusing of the laser beam (4) onto a focal plane (7) determined by the contact surfaces of the work pieces (8, 9).

10. Method for joining two work pieces (8, 9) made of thermoplastic plastic materials along defined contact surfaces being assigned to each other by means of a laser transmission-welding device as claimed in any one of the previous claims 1 to 9, wherein the work piece that is nearer to the laser source is transparent and the work piece that is more distant from the laser source is absorbent for the laser beam (4) of the laser source, comprising the following steps of:
• Arranging the work pieces (8, 9) on a work piece holder (13) in front of an outlet nozzle (10) respectively (15) or between two outlet nozzles (10, 15) for applying a liquid stream (11, 16) being positioned opposite one another;
• Impinging the work pieces (8, 9) with a liquid stream (11, 16) from at least one outlet nozzle (10, 15) und pressing together the two work pieces (8, 9) with an adjustable contact pressure of the liquid stream (11, 16);
• Impinging the compressed work pieces (8, 9) with a laser beam (4) und melting the contact surfaces of the two work pieces (8, 9) under interaction of the laser beam; and
• Cooling the contact surfaces with maintenance of the contact pressure.

11. Method as claimed in claim 10, **characterized in that** a hydrogen stream is used as liquid stream (11, 16).

12. Method as claimed in claim 10 or 11, **characterized in that** the liquid stream is heated up and the heat of the liquid stream (11, 16) is transferred to the work pieces (8, 9).

13. Method as claimed in any one of the claims 10 to 12, **characterized in that** the liquid stream (11, 16) and the laser beam (4) are synchronously moved relative to the work pieces (8, 9).

14. Method as claimed in any one of the claims 10 to 13, **characterized in that** the liquid stream (11, 16) is directed towards the work piece (8) that is nearer to the laser source and is transparent for the laser beam (4) and / or towards the work piece (9) that is more distant from the laser source and is absorbent for the laser beam (4).

15. Method as claimed in any one of the claims 10 to 14, **characterized in that** the liquid stream (11, 16) and the laser beam (4) are aligned parallel to one another, preferably arranged concentrically to each other.

## Revendications

1. Dispositif de soudage par transmission laser pour assembler des pièces (8, 9) en matières plastiques thermoplastiques, avec un porte-pièce pour positionner les pièces (8, 9), avec une tête d'usinage (1) dans laquelle un faisceau laser (4) peut être entré et sorti par couplage, qui plastifie les pièces (8, 9) à leurs surfaces de contact le long d'un contour de soudage, des dispositifs de guidage pour le faisceau laser (4) étant prévus dans la tête d'usinage (1), et avec un dispositif de pression disposé à distance des pièces (8, 9) pour presser l'une contre l'autre les pièces (8, 9) pendant le processus de soudage, qui expose directement les pièces (8, 9) à au moins un courant de fluide (11, 16) qui presse les pièces (8, 9) l'une contre l'autre et/ou contre le porte-pièce (13), la tête d'usinage (1) et le porte-pièce étant mobiles l'une par rapport à l'autre, **caractérisé en ce que** le courant de fluide (11, 16) est un courant de liquide.

2. Dispositif de soudage par transmission laser selon la revendication 1, **caractérisé en ce que** le courant de liquide (11, 16) est un courant d'eau.

3. Dispositif de soudage par transmission laser selon la revendication 1 ou 2, **caractérisé en ce que** le courant de liquide (11, 16) provient d'une source chauffante.

4. Dispositif de soudage par transmission laser selon une des revendications 1 à 3, **caractérisé en ce qu'**au niveau de la tête d'usinage (1), du côté des pièces (8, 9) tourné vers la tête d'usinage (1), au moins une buse de sortie (10) pour le courant de liquide (11), qui est mobile de manière synchrone avec la tête d'usinage (1) par rapport aux pièces (8, 9), est disposée en direction des pièces (8, 9).

5. Dispositif de soudage par transmission laser selon une des revendications 1 à 3, **caractérisé en ce que** du côté des pièces (8, 9) éloigné de la tête d'usinage (1), en face de la tête d'usinage (1), une tête de buse (14) avec au moins une buse de sortie (15) pour le courant de liquide (16), qui est mobile de manière synchrone avec la tête d'usinage (1) par rapport aux pièces (8, 9), est disposée en direction des pièces (8, 9).

6. Dispositif de soudage par transmission laser selon la revendication 4, **caractérisé en ce que** la tête d'usinage (1) présente ladite au moins une buse de sortie (10) pour le courant de liquide (11) qui est dirigée en direction des pièces (8, 9).

7. Dispositif de soudage par transmission laser selon la revendication 4 ou 5, **caractérisé en ce qu'**un axe longitudinal de la buse de sortie (10, 15) est orienté parallèlement au faisceau laser (4).

8. Dispositif de soudage par transmission laser selon une des revendications 4 à 7, **caractérisé en ce que** la buse de sortie (10, 15) est disposée concentriquement au faisceau laser (4).

9. Dispositif de soudage par transmission laser selon une des revendications précédentes, **caractérisé en ce que** la tête d'usinage (1) présente au moins une lentille (6) pour conformer et/ou focaliser le faisceau laser (4) sur un plan focal (7) déterminé par les surfaces de contact des pièces (8, 9).

10. Procédé pour assembler deux pièces (8, 9) en matières plastiques thermoplastiques le long de surfaces de contact définies, associées l'une à l'autre, au moyen d'un dispositif de soudage par transmission laser selon une des revendications précédentes 1 à 9, la pièce la plus proche d'une source laser étant transparente et la pièce la plus éloignée de celle-ci absorbante pour le faisceau laser (4) de la source laser, lequel procédé présente les étapes suivantes :
• disposition des pièces (8, 9) sur un porte-pièce (13) devant une buse de sortie (10), respectivement (15), ou entre deux buses de sortie (10, 15) situées l'une en face de l'autre pour un courant de liquide (11, 16) ;
• exposition des pièces (8, 9) à un courant de liquide (11, 16) provenant d'au moins une buse de sortie (10, 15) et pressage l'une contre l'autre des deux pièces (8, 9) avec une pression d'application réglable du courant de liquide (11, 16) ;
• exposition des pièces (8, 9) pressées l'une contre l'autre à un faisceau laser (4) et fusion des surfaces de contact des deux pièces (8, 9) sous l'effet du faisceau laser ; et
• refroidissement des surfaces de contact avec maintien de la pression d'application.

11. Procédé selon la revendication 10, **caractérisé en ce qu'**un courant d'eau est utilisé comme courant de liquide (11, 16).

12. Procédé selon la revendication 10 ou 11, **caractérisé en ce que** le courant de liquide (11, 16) est chauffé et la chaleur du courant de liquide (11, 16) transmise aux pièces (8, 9).

13. Procédé selon une des revendications 10 à 12, **caractérisé en ce que** le courant de liquide (11, 16) et le faisceau laser (4) sont déplacés de manière synchrone l'un avec l'autre par rapport aux pièces (8, 9).

14. Procédé selon une des revendications 10 à 13, **caractérisé en ce que** le courant de liquide (11, 16) est dirigé sur la pièce (8) la plus proche de la source laser, transparente au faisceau laser (4) et/ou sur la pièce (9) la plus éloignée de la source laser, absorbante pour le faisceau laser (4).

15. Procédé selon une des revendications 10 à 14, **caractérisé en ce que** le courant de liquide (11, 16) et le faisceau laser (4) sont dirigés parallèlement l'un à l'autre, de préférence concentriquement l'un à l'autre.
